# EUROPEAN PATENT SPECIFICATION

(11) **EP 3 010 944 B1**
(45) Date of publication and mention of the grant of the patent: **16.08.2017**
(21) Application number: 14728587.8
(22) Date of filing: 10.06.2014
(51) Int. Cl.: C08F 4/649, C08F 110/06, C08F 110/02, C08F 4/654

(54) **PRE-POLYMERIZED CATALYST COMPONENTS FOR THE POLYMERIZATION OF OLEFINS**
VORPOLYMERISIERTE KATALYSATORKOMPONENTEN ZUR POLYMERISIERUNG VON OLEFINEN
COMPOSANTS DE CATALYSEUR PRÉ-POLYMÉRISÉS POUR LA POLYMÉRISATION DES OLÉFINES

(30) Priority: 18.06.2013 EP 13172377
(43) Date of publication of application: 27.04.2016
(73) Proprietor: Basell Poliolefine Italia S.r.l., 20127 Milano (IT)
(72) Inventor: BRITA, Diego, I-44122 Ferrara (IT); COLLINA, Gianni, I-44122 Ferrara (IT); MORINI, Giampiero, I-44122 Ferrara (IT)
(74) Representative: Giberti, Stefano
(86) International application number: PCT/EP2014/061958
(87) International publication number: WO 2014/202420

(56) References cited:
- WO-A1-98/45368
- WO-A1-2006/040240
- US-A1- 2010 168 341

## Description

### FIELD OF THE INVENTION

The present disclosure relates to catalyst components for the preparation of ethylene (co)polymers by using gas-phase, slurry or bulk (co)polymerization processes.

### BACKGROUND OF THE INVENTION

High-yield catalyst components for the polymerization of olefins and in particular for ethylene are known in the art. They are generally obtained by supporting, on a magnesium dihalide, a titanium compound chosen from titanium halides, alkoxide and haloalcoholates. Said catalyst components are then used together with an aluminum alkyl compound in the polymerization of ethylene. These catalyst components, and the catalysts obtained therefrom, are largely used in the plants for the (co)polymerization of ethylene both operating in liquid phase (slurry or bulk) and in gas-phase. However, the use of the catalyst components as such is not completely satisfactory. Indeed, due to the high reactivity of the ethylene, the kinetic of the polymerization reaction is very high. As a consequence, the catalyst is subject to a very strong tension during the initial stage of polymerization which can cause the uncontrolled breakage of the catalyst itself. This event is the cause of the formation of fine particles of polymer, which, in turn, leads to low bulk density of the polymer and to operating process difficulties.

In the attempt to solve these problems, the catalyst is pre-polymerized under controlled conditions, so as to obtain pre-polymerized catalysts purposed to have good morphology. In fact, it is believed that after the pre-polymerization, the catalysts increase their resistance in such a way that the tendency to break under polymerization conditions is decreased. As a consequence, the formation of fine particles would be reduced and the overall bulk density improved. Typically, the catalysts are prepolymerized with one olefin which is often the same olefin which is then polymerized in the main polymerization step. Accordingly, the non-stereospecific catalysts used for ethylene polymerization are often pre-polymerized with ethylene. The pre-polymerization with ethylene of a non-stereospecific catalyst to be used in ethylene polymerization however, does not fully solve the problem. In fact, the morphological properties and resistance of the catalyst are improved, if any, only in combination with an unacceptable decrease of the catalyst polymerization activity. This is confirmed for example by USP 4,325,837 which discloses in table 14A and 14B, the use of a non-stereospecific catalyst pre-polymerized with ethylene to an extent of lower than 50% b.w., based on the weight of the total pre-polymerized catalyst. The activity and the morphological properties of the polymer produced with the pre-polymerized catalyst are in certain cases lower than that of the non-pre-polymerized one. In the same patent it is said (column 37 lines 57-60) that the use of a pre-polymerized catalyst is of no advantage with respect to the non pre-polymerized one.

WO01/85803 describes that by the pre-polymerization of a non stereospecific catalyst with prochiral monomers it would be possible to obtain a catalyst for the polymerization of olefins capable to produce polymers with high bulk density and that has an activity which is higher than that of the original non pre-polymerized catalyst. The prepolymerization is carried out at room temperature, in the presence of an aluminum alkyl compound and monomer (propylene) so as to obtain low polymerization conversion. The prepolymerized catalyst obtained offers high activity but it still needs to be improved in terms of morphological stability when subject to ethylene polymerization carried out under drastic conditions. Moreover, the prepolymerized catalyst particles show a slow settling velocity which makes its productivity lower because of the longer time required before siphoning the liquid medium in which they were suspended.

The applicant has now found that when the pre-polymer of a prepolymerized catalyst shows specific features in terms of stereoregularity and molecular weight, the said prepolymerized catalyst is endowed with high settling velocity and morphological stability together with high activity. In fact, such catalyst when used in the polymerization of ethylene is capable to generate in high yields polymers with regular morphology even under drastic polymerization conditions..

### SUMMARY OF THE INVENTION

It is therefore an object of the present disclosure a pre-polymerized catalyst component for the polymerization of olefins, characterized by comprising a non-stereospecific solid catalyst component, comprising Ti, Mg and a halogen and an amount of a (co)polymer of an alpha-olefin CH₂=CHR¹, wherein R is a C₁-C₁₂ hydrocarbon group, ranging from 0.1 up to 500g per g of said solid catalyst component, said (co)polymer being characterized by an isotacticity from 60 to 95% molar expressed in terms isotactic pentads and by an intrinsic viscosity, measured in tetraline at 135°C, of at least 1.0 dL/g.

### DETAILED DESCRIPTION OF THE INVENTION

The isotacticity ranges from 65% to 90% and especially from 65 to 85%. It is especially preferred that the isotacticity be in the range 70-85%.

In another specific embodiment the intrinsic viscosity is equal to or higher than 1.3 and more preferably equal to or higher than 1.5. It is especially preferred that the intrinsic viscosity be in the range 1.5-2.5 dL/g. In a particular embodiment of the present invention when the intrinsic viscosity is in the range 1.0 to 1.5 the isotacticity is higher than 70%.

In another preferred embodiment the isotacticity is higher than 70% and the intrinsic viscosity is in the range 1.5-2.5 dL/g.

Throughout the present disclosure the term "non-stereospecific solid catalyst component" means a solid catalyst component that gives, under the standard polymerization conditions described in the experimental section, a propylene homopolymer having an insolubility in xylene at 25°C lower than 60%, preferably lower than 55% and more preferably lower than 50%.

Preferably, the alpha-olefin is selected from those of CH₂=CHR¹ wherein R¹ is a C₁-C₆ linear alkyl group. Preferably, the alpha-olefin is selected from propylene, butene-1, hexene-1 and octene-1. Most preferably, the alpha olefin is propylene.

In a specific embodiment, the amount of alpha-olefin (co)polymer is less than 100g, more preferably less than 50g and especially less than 10g per g of solid catalyst component. In a particularly preferred embodiment, said amount is from 0.5 to 5 g per g of solid catalyst component.

Preferably, the prepolymerized catalyst component has a mercury porosity due to pores up to 1 µm ranging from 0.1 to 0.4 cm³/g.

Preferably the non-stereospecific solid catalyst component comprises a titanium compound and a magnesium dihalide. The magnesium halides, preferably MgCl₂, in active form used as a support for Ziegler-Natta catalysts, are widely known from the patent literature. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is broadened to form a halo.

The preferred titanium compounds used in the non-stereospecific solid catalyst component of the present invention are those of formula Ti(OR^{II})_{n-y}X_{y}, where R^{II} is a C₁-C₂₀ hydrocarbon group, X is halogen, n is the valence of titanium and y is a number between 1 and n. Particularly preferred compounds are TiCl₄, TiCl₃ and Ti-tetraalcoholates or Ti-chloroalcoholates of formula Ti(OR^{III})ₐClₙ₋ₐ where n is the valence of titanium, a is a number comprised between 1 and n, and R^{III} is a C₁-C₈ alkyl or aryl group. Preferably R^{III} is selected from ethyl, propyl, n-butyl, isobutyl, 2-ethylhexyl, n-octyl and phenyl.

The titanium compound can be pre-formed, or it is produced in-situ by the reaction of a titanium tetrahalide, in particular TiCl₄, with alcohols R^{II}OH or with titanium alkoxides having the formula Ti(OR^{II})₄ where R^{II} has the meaning defined above.

Preferably, more than 50%, more preferably more than 70% and especially more than 90% of the titanium atoms are in the 4⁺ valence state.

The non-stereospecific solid catalyst components may comprise an electron donor compound (internal donor), selected among ethers, esters, amines and ketones. However, as already explained, the solid catalyst component must be non stereospecific according to the definition already given and determined according to the test reported in the characterization section. Therefore, if present, the electron donor compound should either not have stereoregulating ability or be present in such an amount that it does not provide sufficient stereoregulating ability to the catalyst. As a general indication, the electron donors not having stereoregulating ability may be present in a wide range of amounts but preferably to an extent such that their molar ratio to Ti is lower than 10, preferably lower than 7 and more preferably lower than 5. Preferably, donors having stereoregulating ability or belonging to formula (I) below, are present in amount such as to give ED/Ti ratios lower than 0.5, preferably lower than 0.3 and more preferably lower than 0.1.

Preferred electron donor compounds are selected from esters of aliphatic or aromatic carboxylic acids such as phthalates, acetates, in particular ethylacetate, benzoates, alkoxybenzenes described in WO2011/015553, cyclic alkyl ethers such as tetrahydrofurane and electron donor compound of formula (I) below

RR₁C(OR₄)-CR₂R₃(OR₅) (I)

in which R, R₁, R₂ and R₃ are, independently, hydrogen or C₁-C₂₀ hydrocarbon groups which can also be condensed to form a cycle, R₄ and R₅ are C₁-C₂₀ alkyl groups, or R₆CO-groups where R₆ is a C₁-C₂₀ alkyl or aryl group, or they can be joined with R and R₃ respectively to form a cycle; said R to R₆ groups possibly containing heteroatoms selected from O, Si, halogens, S, N and P.

Preferably, when R and R₄ form a cycle, R₅ is C₁-C₂₀ alkyl group. Preferably, in the electron donor compound of formula (I), R, R₄ and R₅ are methyl.

Preferably, in the electron donor compound of formula (I) R₁ to R₃ are hydrogen. When R₄ and R₅ are linear, branched or cyclic alkyl groups they are preferably chosen among C₁-C₅ alkyl groups and more preferably among methyl or ethyl. Preferably they are both methyl. Among R₆CO groups preferred is acetyl and benzyl.

Specific electron donor compounds of formula (I) are ethylene glycol diacetate, 1,2-dimethoxypropane, 1,2-diethoxypropane, 1,2-diethoxyethane, methyl tetrahydrofurfuryl ether, 1,2-dimethoxypropane being the most preferred.

As mentioned above such donors either do not have stereoregulatung ability or are used in such an amount that they do not provide sufficient stereoregulating ability.

In addition to the above mentioned characteristics, the non-stereospecific solid catalyst component (a) may show a porosity P_{F} determined with the mercury method ranging from 0.2 to 0.80 cm³/g and more preferably from 0.3 to 0.70 cm³/g usually in the range 0.35-0.60 cm³/g.

The surface area measured by the BET method is preferably lower than 80 and in particular comprised between 10 and 70 m²/g. The porosity measured by the BET method is generally comprised between 0.10 and 0.50, preferably from 0.10 to 0.40 cm³/g.

The particles of solid component have substantially spherical morphology and average diameter comprised between 5 and 150 µm, preferably from 20 to 100 µm and more preferably from 30 to 80 µm. As particles having substantially spherical morphology, those are meant wherein the ratio between the greater axis and the smaller axis is equal to or lower than 1.5 and preferably lower than 1.3.

A method suitable for the preparation of spherical components mentioned above comprises a step (a) in which a compound MgCl₂.mR^{III}OH, wherein 0.3 ≤ m ≤ 1.7 and R^{III} is an alkyl, cycloalkyl or aryl radical having 1-12 carbon atoms is reacted with the said titanium compound of the formula Ti(OR^{I})ₙX₄₋ₙ, in which n, y, X and R^{I} have the same meaning as already defined.

In this case MgCl₂.mR^{III}OH represents a precursor of Mg dihalide. These kind of compounds can generally be obtained by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in USP 4,469,648, USP 4,399,054, and WO98/44009. Another useable method for the spherulization is the spray cooling described for example in USP 5,100,849 and 4,829,034. Adducts having the desired final alcohol content can be obtained by directly using the selected amount of alcohol directly during the adduct preparation. However, if adducts with increased porosity are to be obtained it is convenient to first prepare adducts with more than 1.7 moles of alcohol per mole of MgCl₂ and then subjecting them to a thermal and/or chemical dealcoholation process. The thermal dealcoholation process is carried out in nitrogen flow at temperatures comprised between 50 and 150°C until the alcohol content is reduced to the value ranging from 0.3 to 1.7. A process of this type is described in EP 395083.

Generally these dealcoholated adducts are also characterized by a porosity (measured by mercury method ) due to pores with radius due to pores with radius up to 0.1µm ranging from 0.15 to 2.5 cm³/g preferably from 0.25 to 1.5 cm³/g.

In the reaction of step (a) the molar ratio Ti/Mg is stoichiometric or higher; preferably this ratio is higher than 3. Still more preferably a large excess of titanium compound is used. Preferred titanium compounds are titanium tetrahalides, in particular TiCl_{4.} The reaction with the Ti compound can be carried out by suspending the adduct in cold TiCl₄ (generally 0°C); the mixture is heated up to 80-140°C and kept at this temperature for 0.5-8 preferably from 0.5 to 3 hours. The excess of titanium compound can be separated at high temperatures by filtration or sedimentation and siphoning. The step (a) can be repeated twice or more. In cases of catalysts containing an electron donor compound, this latter can be added together with the titanium compound in the reaction system for reaction with the MgCl₂.mR^{III}OH adduct. However, it can also be first contacted with the adduct alone and then the so formed product reacted with the titanium compound. As an alternative method, the electron donor compound can be added separately in a further step after the completion of the reaction between the adduct and the titanium compound.

The pre-polymerized catalyst component of the present disclosure can be obtained by pre-polymerizing the non-stereospecific solid catalyst component with the alpha olefin CH₂=CHR¹. In particular, the prepolymer of the present invention can be obtained by contacting the olefin, the non-stereospecific solid catalyst component, an aluminum alkyl (B) as cocatalyst and an external electron donor compound (C) in such an amount to have a molar ratio (B)/(C) lower than 100.

Preferably, the electron donor compound (C) is used in such an amount that the molar ratio (B)/(C) ranges from 0.1 to 50, preferably from 1 to 20 and more preferably from 1 to 10.

The alkyl-Al compound (B) is preferably chosen among the trialkyl aluminum compounds such as for example triethylaluminum, triisobutylaluminum, tri-n-butylaluminum, tri-n-hexylaluminum, tri-n-octylaluminum. Use of tri-n-octylaluminum is particularly preferred. It is also possible to use mixtures of trialkylaluminum's with alkylaluminum halides, alkylaluminum hydrides or alkylaluminum sesquichlorides such as AlEt₂Cl and Al₂Et₃Cl₃.

It has been found particularly advantageous to carry out said pre-polymerization using low amounts of alkyl-Al compound. In particular, said amount could be such as to have an Al/Ti molar ratio from 0.01 to 50, preferably from 0.01 to 10 and more preferably from 0.05 to 3.

The external electron donor compound can be selected from alcohol, glycols, esters, ketones, amines, amides, nitriles, alkoxysilanes and ethers.

Among alkoxysilanes preferred are those of formula (R₇)ₐ(R₈)_{b}Si(OR₉)_{c}, where a and b are integers from 0 to 2, c is an integer from 1 to 4 and the sum (a+b+c) is 4; R₇, R₈, and R₉, are radicals with 1-18 carbon atoms optionally containing heteroatoms. Particularly preferred are the silicon compounds in which a is 1, b is 1, c is 2, at least one of R₇ and R₈ is selected from branched alkyl, cycloalkyl or aryl groups with 3-10 carbon atoms optionally containing heteroatoms and R₉ is a C₁-C₁₀ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane, N,N-diethylaminotriethoxysilane. Moreover, are also preferred the silicon compounds in which a is 0, c is 3, R₈ is a branched alkyl or cycloalkyl group, optionally containing heteroatoms, and R₉ is methyl. Examples of such preferred silicon compounds are cyclohexyltrimethoxysilane, t-butyltrimethoxysilane and thexyltrimethoxysilane. Also employable are aminosilanes disclosed in EP-A-1538167.

Among ethers preferred are alkoxybenzenes described in WO2011/015553, cyclic alkyl ethers such as tetrahydrofurane, 1,3-diethers such as those described in EP362705 and EP728769 and electron donor compound of formula (I) below

RR₁C(OR₄)-CR₂R₃(OR₅) (I)

in which R, R₁, R₂ and R₃ are, independently, hydrogen or C₁-C₂₀ hydrocarbon groups which can also be condensed to form a cycle, R₄ and R₅ are C1-C20 alkyl groups, or R₆CO-groups where R₆ is a C₁-C₂₀ alkyl or aryl group, or they can be joined with R and R₃ respectively to form a cycle; said R to R₆ groups possibly containing heteroatoms selected from O, Si, halogens, S, N and P.

Preferably, when R and R₄ form a cycle, R₅ is C1-C20 alkyl group. Preferably, in the electron donor compound of formula (I), R, R₄ and R₅ are methyl.

Preferably, in the electron donor compound of formula (I) R₁ to R₃ are hydrogen. When R₄ and R₅ are linear, branched or cyclic alkyl groups they are preferably chosen among C1-C5 alkyl groups and more preferably among methyl or ethyl. Preferably they are both methyl. Among R₆CO groups preferred is acetyl and benzyl.

Specific electron donor compounds of formula (I) are ethylene glycol diacetate, 1,2-dimethoxypropane, 1,2-diethoxypropane, 1,2-diethoxyethane, methyl tetrahydrofurfuryl ether, 1,2-dimethoxypropane being the most preferred.

Preferred esters can be selected from monoesters of aromatic carboxylic acids like benzoates, in particular the C₁-C₁₀ alkyl esters of benzoic acids, and monoesters of aliphatic carboxylic acids like C₁-C₈ alkyl esters of aliphatic mono carboxylic acids, ethylacetate being an example.

Another class of interest is that of C₁-C₁₀ alkyl esters of aromatic dicarboxylic acids like phthalates and C₁-C₁₀ alkyl esters of aliphatic dicarboxylic acids like, malonates, succinates and glutarates. Moreover, also diesters of diols such as those disclosed in USP 7,388,061, and WO2010/078494 can be employed.

Preferred esters are ethylacetate, di-isobutyl phthalate, p-ethoxy-ethylbenzoate, diethyl 2,3 diisopropylsuccinate.

Preferred alcohol are those of formula R³OH in which the R³ group is a C₁-C₂₀ hydrocarbon group. Preferably, R³ is a C₁-C₁₀ alkyl group. Specific examples are methanol, ethanol, isopropanol and butanol.

Preferred amines are those of formula NR⁴₃ in which the R⁴ groups, are, independently, hydrogen or a C₁-C₂₀ hydrocarbon group with the proviso that they are not contemporaneously hydrogen. Preferably, R⁴ is a C₁-C₁₀ alkyl group. Specific examples are diethylamine, diisopropylamine and triethylamine.

Preferred amides are those of formula R⁵CONR⁶₂ in which R⁵ and R⁶ are, independently, hydrogen or a C₁-C₂₀ hydrocarbon group. Specific examples are formamide and acetamide.

Preferred nitriles are those of formula R³CN where R³ has the same meaning given above. A specific example is acetonitrile.

Preferred glycol are those having a total number of carbon atoms lower than 50. Among them particularly preferred are the 1,2 or 1,3 glycol having a total number of carbon atoms lower than 25. Specific examples are ethylene glycol, 1,2-propylene glycol and 1,3-propylene glycol.

The pre-polymerization can be carried out in liquid phase, (slurry or solution) or in gas-phase at temperatures ranging from -10 to 100°C, preferably ranging from 0 to 50°C and more preferably ranging from 5 to 30°C. Furthermore, it is preferably carried out in a liquid diluent in particular selected from liquid hydrocarbons. Among them, pentane, hexane and heptane are preferred. The alpha olefin feeding is preferably kept under very mild conditions in general less than 50g/h preferably less than 30 g/h. The amount of aluminum alkyl used is generally less than 20 mol of A1 per mol of Ti in the catalyst, preferably less than 10 mole and preferably ranging from 0.2 to 2 mol of A1 per mol of Ti.

The so obtained prepolymerized catalyst can be used as such in the polymerization or it can be subject to further treatments. Particularly when the solid catalyst component used in the prepolymerization does not contain an internal electron donor, it constitutes a preferred embodiment a prepolymer treatment comprising the supportation of an electron donor on the prepolymer. The electron donor can be chosen among the internal donors already described and it is typically carried out by contacting the prepolymer and the electron donor in a suitable liquid hydrocarbon medium which is then removed by drying. Additional possible treatments are further reaction with titanium compounds containing at least one Ti-halogen bond, treatments with halogenating agents and treatments with aluminum alkyls.

As explained, the so obtained pre-polymerized catalyst components, which is endowed with lower settling times with respect to the prepolymers of the prior art, can be used in the (co)polymerization of ethylene, allowing to obtain, with high yields, polymers with regular morphology particularly expressed in terms of high bulk density. In addition, the catalyst show excellent performances in the copolymerization of ethylene with alpha-olefins making possible to produce LLDPE polymers having a low content of xylene soluble fraction in respect of a given polymer density.

In particular, said ethylene (co)polymerization processes can be carried out in the presence of a catalyst comprising (A) the pre-polymerized catalyst component above described and (B) an Al-alkyl compound of the type described above. In the main polymerization process the amount of A1 is higher than that used in the prepolymerization step. Preferably, the Al compound is used in an amount such that the Al/Ti ratio is higher than 1 and is generally comprised between 20 and 800. Although not necessary, an external electron donor compound (C) as described above can be used in the ethylene polymerization step.

The catalysts of the present disclosure can be used in any of the olefin polymerization processes known in the art. They can be used for example in slurry polymerization using as diluent an inert hydrocarbon solvent or bulk polymerization using the liquid monomer as a reaction medium. In particular, they are suitably used in the polymerization process carried out in gas-phase. The gas-phase process can be carried out in a fluidized or stirred, fixed bed reactor or in a gas-phase reactor comprising two interconnected polymerization zones one of which, working under fast fluidization conditions and the other in which the polymer flows under the action of gravity. Also, combination of both type of gas-phase reactors can be used. In a preferred embodiment the catalyst is used to polymerize ethylene in a multistep gas-phase process in which the first step is carried out in a fluidized bed gas-phase reactor and the successive step is carried out in a second a gas-phase reactor comprising two interconnected polymerization zones one of which, working under fast fluidization conditions and the other in which the polymer flows under the action of gravity.

They can be used in polymerization plant set-up including or not a pre-polymerization section. In fact, since the catalysts have no aging problems they can be also pre-polymerized in a batch scale and then used in liquid or gas-phase olefin polymerization plants operating without a pre-polymerization line.

The above described polymerization process can be carried out under the polymerization conditions generally known in the art. Accordingly, the polymerization is generally carried out at temperature of from 20 to 120°C, preferably of from 40 to 90°C.

In any of the polymerization processes used (liquid or gas-phase polymerization) the catalyst forming components (A) and (B) can be pre-contacted before adding them to the polymerization reactor. Said pre-contacting step can be carried out in the absence of polymerizable olefin or optionally in the presence of said olefin in an amount up to 3 g per g of solid catalyst component. The catalyst forming components can be contacted with a liquid inert hydrocarbon solvent such as propane, n-hexane, or n-heptane at a temperature below about 60°C and preferably from about 0°C to 30°C for a time period of from 10 seconds to 60 minutes.

The above process is suitable for the preparation of wide range of polyethylene products. As an example, the following products can be prepared: high density ethylene polymers (HDPE, having a density higher than 0.940 g/cm³), comprising ethylene homopolymers and copolymers of ethylene with α-olefins having 3-12 carbon atoms; linear low density polyethylenes (LLDPE, having a density lower than 0.940 g/cm³) and very low density and ultra low density (VLDPE and ULDPE, having a density lower than 0.920 g/cm³, to 0.880 g/cm³) consisting of copolymers of ethylene with one or more α-olefins having from 3 to 12 carbon atoms, having a mole content of units derived from the ethylene higher than 80%.

The following examples are given in order better illustrate the invention.

### EXAMPLES

### Characterization

The properties are determined according to the following methods:
MIE flow index: ASTM-D 1238 condition E

### Determination of pentads (mmmm%)

The analysis was carried out on xylene insoluble fractions, about 40 mg of polymer were dissolved in 0.5 ml of 1,1,2,2-tetrachloroethane-d2. ¹³C-NMR spectra were acquired at 120°C on a Bruker AV-600 spectrometer equipped with cryoprobe, operating at 150.91 MHz in the Fourier transform mode. A 90° pulse, 15 seconds of delay between pulses and Composite Pulse Decoupling (CPD, bi_WALTZ_65_64pl sequence) to remove ¹H-¹³C coupling were used. About 512 transients were stored in 64K data points with a spectral window of 9000 Hz. The peak of mmmm pentad in the methyl region at 21.80 ppm was used as internal reference. The tacticity of the polypropylene (PP) prepolymer was evaluated from integrals of pentads in the PP methyl region using the microstructure analysis described in literature *("*Studies of the stereospecific polymerization mechanism of propylene by a modified Ziegler-Natta catalyst based on 125 MHz 13C n.m.r. spectra" Y. Inoue, Y. Itabashi, R. Chûjô Polymer, 1984, 25, 1640, and *"*Two-site model analysis of 13C n.m.r. of polypropylene polymerized by Ziegler-Natta catalyst with external alkoxysilane donors" R. Chûjô, Y. Kogure, T. Väänänen Polymer, 1994, 35, 339). In case overlapping signals of chain ends were subtracted. The experimental pentad distribution was fitted using the two-site model described in the second reference *(*Polymer, 1994). The total mmmm pentad obtained from the fitting is reported.

**Intrinsic viscosity:** determined in tetrahydronaphthalene at 135°C. After dissolving the sample in tetrahydronaphthalene at 135 °C the solution is poured into the capillary viscometer. The viscometer tube (Ubbelohde type) is surrounded by a cylindrical glass jacket; this setup allows temperature control with a circulating thermostated liquid. The passage of the meniscus in front of the upper lamp starts the counter which has a quartz crystal oscillator. The meniscus stops the counter as it passes the lower lamp and the efflux time is registered: This is converted into a value of intrinsic viscosity through Huggins' equation, knowing the flow time of the pure solvent at the same experimental conditions (same viscometer and same temperature). One single polymer solution is used to determine [*η*].

### General procedure for the standard propylene polymerization test

A 4 liter steel autoclave equipped with a stirrer, pressure gauge, thermometer, catalyst feeding system, monomer feeding lines and thermostating jacket, was used. The reactor was charged with 0.01 g of solid catalyst component and with 6.6 mmoles of TEAL. Moreover, 1.6 kg of propylene, and 1.5 NL of hydrogen were added. The system was heated to 70°C over 10 min. under stirring, and maintained under these conditions for 120 min. At the end of the polymerization, the polymer was recovered by removing any non-reacted monomers and was dried under vacuum.

2.5 g of the so produced polymer and 250 ml of o-xylene were placed in a roundbottomed flask provided with a cooler and a reflux condenser and kept under nitrogen. The obtained mixture was heated to 135°C and was kept under stirring for about 60 minutes. The final solution was allowed to cool to 0°C under continuous stirring, and the insoluble polymer was then filtered at 0°C. The filtrate was then evaporated in a nitrogen flow at 140°C to reach a constant weight. The content of said xylene-soluble fraction is expressed as a percentage of the original 2.5 grams and then, by difference, the X.I. %.

### General slurry procedure for ethylene polymerization (HDPE)

Into a 4 liters stainless steel autoclave, degassed under N₂ stream at 70°C, 1600 cc of anhydrous hexane, 0.025 g of spherical component and 0.5g of triethylaluminum (TEA) were introduced. The whole was stirred, heated to 75°C and thereafter 4 bar of H₂ and 7 bar of ethylene were fed. The polymerization lasted 2 hours during which ethylene was fed to keep the pressure constant.

### General procedure for Gas-Phase Ethylene polymerization (HDPE)

A 15.0 liter stainless-steel fluidized reactor equipped with gas-circulation system, cyclone separator, thermal exchanger, temperature and pressure indicator, feeding line for ethylene, propane, hydrogen, and with a 1 L steel reactor for the catalyst pre-polymerization and/or injection of the catalytic system into the fluidized bed reactor.

The gas-phase apparatus was purified by fluxing pure nitrogen at 40 °C for 12 hours and then was circulated a propane (10 bar, partial pressure) mixture containing 0.2g of triisobutylaluminum (TIBA) at 80 °C for 30 minutes. It was then depressurized and the reactor washed with pure propane, heated to 80 °C and finally loaded with propane (60mol%), ethylene (10ml%) and hydrogen (30mol%) having 24 bar of total pressure.

In a 100 mL three neck glass flask were introduced in the following order, 20 mL of anhydrous heptane, 1.1g of TIBA, 0.16g of DiethylChloroAluminum (DEAC), 0.014g of Tetrahydrofurane (THF) and 0.22g of the catalyst component. They were mixed together and stirred at room temperature for 5 minutes and then introduced in the 1-L reactor with 100g of propane. Here It was kept at 50°C per 1.5 hours before the introduction of the catalytic system into the fluidized bed reactor where the polymerization starts. The polymerization test lasts 2 hours.

### Examples

### Example 1

### Procedure for the preparation of the spherical support (adduct of MgCl₂/EtOH)

A magnesium chloride and alcohol adduct was prepared following the method described in Example 2 of USP 4,399,054, but working at 2000 RPM instead of 10000 RPM. The adduct containing about 3 mols of alcohol and about 2.5%wt of H₂O and had an average size of about 55 µm. The adduct was subject to a thermal treatment, under nitrogen stream, over a temperature range of 50-150 °C until a weight content of 25% of alcohol was reached.

### Procedure for the preparation of the non stereospecific catalyst component

Into a 2 L reaction vessel, purged with nitrogen, 1 L of TiCl₄ was introduced at 0°C. Then, at the same temperature, 70 grams of a spherical MgCl₂/EtOH adduct containing 25%wt of ethanol, prepared as described above, were added under stirring.

The temperature was raised to 130°C in 2 hours and maintained for 60 min. Then, the stirring was discontinued, the solid product was allowed to settle (in 1h keeping still 130°C) and the supernatant liquid was siphoned off. A volume of fresh TiCl₄ was introduced into the reactor in order to have again 1L of total slurry and the temperature was raised to 110°C under stirring. This temperature was kept for 15' then the stirring was stopped and the solid was allowed to settle (in 1h at 110°C), and the supernatant liquid was siphoned off.

The solid residue was then washed two times with hexane at 50°C and three times at 25°C and dried under vacuum at 30°C and analyzed.

The spherically shaped solid has a magnesium content of 19.0%wt, and an average particle size (P50) of 57 µm (micron).

The intermediate solid component was tested in propylene polymerization, using the general method described here above. The polymer obtained from that test, has a xylene insoluble fraction of 48.1%wt.

### Propylene- Pre-polymerization

Into a 1.5L glass reactor provided with stirrer, 0.8L of hexane at 20°C and whilst stirring 47g of the catalyst component prepared as described above were introduced at 10°C. Keeping constant the internal temperature, 14g of tri-n-octylaluminum (TnOA) in hexane (about 370 g/l) were slowly introduced into the reactor and the temperature was kept at 10°C. After 3' minutes stirring, a fixed amount of an external electron donor compound (C) was introduced into the reactor in such an amount as indicated in table 1. After 10', 61g of propylene were carefully introduced into the reactor at the same temperature in 6 hours keeping a constant flow. The consumption of propylene in the reactor was monitored and the polymerization was discontinued when a theoretical conversion of 1.3g of polymer per g of catalyst was deemed to be reached. The prepolymer particles were allowed to settle and sedimentation rate was measured. (data in table 1). The product was washed four times with hexane at a temperature of 20°C (60g/L) and dried under vacuum at 30°C. The prepolymerized catalysts were analyzed in terms of stereoregularity (%mmmm) and average molecular weight (intrinsic viscosity). The data are reported in Table 1.

### Internal electron donor supportation on the prepolymerized catalyst

About 42g of the solid prepolymerised catalyst prepared as described in the previous example were charged in a glass reactor purged with nitrogen and slurried with 0.8L of hexane at 50°C.

Then, ethyl acetate was carefully added dropwise (in 10 min) in such an amount to have a molar ratio of 1.7 between Mg of the prepolymerised catalyst and the organic Lewis base.

The slurry was kept under stirring for 2h still having 50°C as internal temperature.

After that the stirring was stopped and the solid was allowed to settle. One single hexane wash was performed at room temperature before recovering and drying the final catalyst.

The final solid composition is also shown in Table 1.

The so obtained pre-polymerized solid catalyst component was employed in the ethylene polymerization according to both slurry and gas phase procedure the results of which are reported in table 2 and 3 respectively.

### Comparative Example 2

The catalyst was prepared according to the procedure described in example 1 but the prepolymerisation process was carried out without the addition of any external electron donor compound. Catalyst composition and characterization is reported also in Table 1. The so obtained pre-polymerized solid catalyst component was employed in the ethylene polymerization according to both slurry and gas phase procedure the results of which are reported in table 2 and 3 respectively.

**Table 1 - List of Electron donor type and relative amount used in pre-polymerization (with respect to the TnOA) and catalyst composition obtained thereafter.**

| Cat. Ex. | Electron Donor (C) (type) | TnOA/(C) (mol/mol) | %mmmm | IV dL/g | Sed. Rate mm/sec | Ti (wt%) | Mg (wt%) | EtOAc (wt%) |
|---|---|---|---|---|---|---|---|---|
| 1-a | Cyclohexylmethyldimethoxysilane | 50 | 76 | 1.0 | 0.29 | 1.6 | 9.0 | 14.8 |
| 1-b | Cyclohexylmethyldimethoxysilane | 12 | 73 | 1.5 | 0.42 | 1.4 | 8.5 | 13.9 |
| 1-c | Cyclohexylmethyldimethoxysilane | 6 | 81 | 1.9 | 0.36 | 1.4 | 8.3 | 13.8 |
| 1-d | Cyclohexylmethyldimethoxysilane | 3 | 83 | 2.1 | 0.38 | 1.4 | 8.2 | 12.6 |
| 1-e | p-Ethoxy Ethyl benzoate | 6 | 73 | 1.5 | 0.36 | 1.4 | 8.1 | 12.2 |
| 1-f | 3.3.3-FluoroPropyl-Methyldimethoxysilane | 6 | 74 | 1.9 | 0.34 | 1.5 | 8.6 | 12.7 |
| 1-g | 1.2 dimethoxy propane | 6 | 66 | 2.4 | ND | 1.4 | 8.2 | 13.5 |
| Comp. ex.2 | absent | ---- | 72 | 0.9 | 0.24 | 1.8 | 9.8 | 16.8 |

**Table 2 - Hexane slurry HDPE polymerization tests made according to the general procedure**

| Cat. Example # | Electron Donor (type) | Mil. Kg/g | MIE (g/10min) | F/E | BDP (g/cc) | P50 µm (micron) |
|---|---|---|---|---|---|---|
| 1-a | Cyclohexylmethyldimethoxysilane | 8.8 | 2.90 | 37.9 | 0.227 | 2253 |
| 1-b | Cyclohexylmethyldimethoxysilane | 9.0 | 1.00 | 33.0 | 0.263 | 2298 |
| 1-c | Cyclohexylmethyldimethoxysilane | 8.8 | 1.40 | 31.4 | 0.276 | 2203 |
| 1-d | Cyclohexylmethyldimethoxysilane | 8.7 | 1.25 | 30.4 | 0.277 | 2246 |
| 1-e | *p*Ethoxy Ethyl benzoate | 8.9 | 1.24 | 30.6 | 0.246 | 2390 |
| 1-f | 3.3.3-FluoroPropylMethyl dimethoxysilane | 8.7 | 1.32 | 34.8 | 0.276 | 2343 |
| 1-g | 1.2 dimethoxy propane | 10.5 | 1.10 | 29.1 | 0.220 | 2246 |
| Com.ex.2 | absent | 7.6 | 0.89 | 30.7 | 0.208 | 2196 |

**Table 3 - Gas phase polymerization HDPE tests made according to the general procedure**

| Cat. Example | Prepoly | Mil. g/g | MIE (g/10min) | BDP (g/cc) | P50 µm (micron) |
|---|---|---|---|---|---|
| 1-a | Cyclohexylmethyldimethoxysilane | 2230 | 64 | 0.272 | 1127 |
| 1-b | Cyclohexylmethyldimethoxysilane | 1505 | 81 | 0.345 | 1072 |
| 1-c | Cyclohexylmethyldimethoxysilane | 1952 | 73 | 0.343 | 1165 |
| 1-d | Cyclohexylmethyldimethoxysilane | 2100 | 80 | 0.345 | 1072 |
| 1-e | p-Ethoxy Ethyl benzoate | 1842 | 69 | 0.351 | 1134 |
| 1-f | 3.3.3-FluoroPropylMethyl dimethoxysilane | 1910 | 93 | 0.326 | 1136 |
| 1-g | 1.2 dimethoxy propane | 1357 | 65 | 0.308 | 1103 |
| Com.ex.2 | absent | 1900 | 60 | 0.259 | 1133 |

### Example 3

The catalysts were prepared according to the procedure described in example 1 but the prepolymerisation process was carried out with the addition of external electron donors reported in table 4 (catalyst compositions and characterization are also included).

The so obtained pre-polymerized solid catalysts were tested in ethylene polymerization according to the slurry methodology procedure while results are reported in table 5.

Table 4 - List of Electron donor type and relative amount used in pre-polymerization (with respect to the TnOA) and catalyst composition obtained thereafter for example 3.

| Cat. Ex. | Electron Donor (C) (type) | TnOA/(C) (mol/mol) | %mmmm | IV dL/g | Sed. Rate mm/sec | Ti (wt%) | Mg (wt%) | EtOAc (wt%) |
|---|---|---|---|---|---|---|---|---|
| 3-a | 1-(tert-butyldimethoxysilyl)-4-methylpiperidine | 6.0 | 80 | 2.4 | 0.35 | 1.3 | 8.0 | 10.3 |
| 3-b | Ethyl acetate | 6.0 | 73 | 1.7 | 0.30 | 1.5 | 8.6 | 13.6 |
| 3-c | diethyl-2,3-diisopropyl succinate | 6.0 | 72 | 1.8 | 0.52 | 1.5 | 8.6 | 13.3 |
| 3-d | Thexyl, trimethoxysilane | 6.0 | 83 | 1.9 | 0.44 | 1.4 | 8.2 | 13.3 |
| 3-e | di-cyclopentyl dimethoxysilane | 6.0 | 82 | 2.1 | 0.38 | 1.2 | 7.7 | 12.0 |
| 3-f | tetraethoxy silane | 6.0 | 77 | 2.1 | 0.35 | 1.2 | 7.6 | 12.3 |

**Table 5 - Hexane slurry HDPE polymerization tests made according to the general procedure with catalysts of example 3**

| Cat. Example # | Electron Donor (type) | Mil. Kg/g | MIE (g/10min) | F/E | BDP (g/cc) | P50 µm (micron) |
|---|---|---|---|---|---|---|
| 5-a | 1-(tert-butyldimethoxysilyl)-4-methylpiperidine | 3.2 | 1.44 | 31.9 | 0.365 | 644 |
| 5-b | Ethyl acetate | 6.1 | 0.8 | 34.5 | 0.242 | 1876 |
| 5-c | diethyl-2,3-diisopropyl succinate | 6.3 | 0.37 | 32.5 | 0.230 | 1949 |
| 5-d | Thexyl- trimethoxysilane | 7.5 | 0.85 | 35.3 | 0.300 | 2065 |
| 5-e | di-cyclopentyl dimethoxysilane | 7.7 | 1.3 | 44.0 | 0.319 | 2073 |
| 5-f | tetraethoxy silane | 9.1 | 0.66 | 34 | 0.275 | 2096 |

### Example 4

The catalysts were prepared according to the procedure described in example 1 but the prepolymerisation process was carried out with the addition of external electron donors reported in table 6 and propylene feeding was reduced in order to have 0.66 gram of polymer per gram of starting catalyst (catalyst compositions and characterization are also included).

The so obtained pre-polymerized solid catalysts were tested in ethylene polymerization according to the slurry methodology procedure while results are reported in table 7.

**Table 6 - List of Electron donor type and relative amount used in pre-polymerization (with respect to the TnOA) and catalyst composition obtained thereafter for example 4.**

| Cat. Ex. | Electron Donor (C) (type) | TnOA/(C) (mol/mol) | %mmmm | IV dL/g | Sed. Rate mm/sec | Ti (wt%) | Mg (wt%) | EtOAc (wt%) |
|---|---|---|---|---|---|---|---|---|
| 4-a | Cyclohexylmethyldimethoxysilane | 6.0 | 76 | 1.8 | 0.75 | 1.8 | 10.5 | 17.6 |
| 4-b | di-cyclopentyl dimethoxysilane | 6.0 | 73 | 1.8 | 0.72 | 1.9 | 10.6 | 13.6 |

**Table 7 - Hexane slurry HDPE polymerization tests made according to the general procedure with catalysts of example 4**

| Cat. Example # | Electron Donor (type) | Mil. Kg/g | MIE (g/10min) | F/E | BDP (g/cc) | P50 µm (micron) |
|---|---|---|---|---|---|---|
| 4-a | Cyclohexylmethyldimethoxysilane | 10.5 | 0.63 | 27.8 | 0.264 | 2182 |
| 4-b | di-cyclopentyl dimethoxysilane | 11.8 | 1.2 | 40.1 | 0.289 | 2251 |

## Claims

1. A pre-polymerized catalyst component for the polymerization of olefins, **characterized by** comprising a non-stereospecific solid catalyst component, comprising Ti, Mg and a halogen and an amount of a (co)polymer of an alpha-olefin CH₂=CHR¹, wherein R is a C₁-C₁₂ hydrocarbon group, ranging from 0.1 up to 500g per g of said solid catalyst component, said (co)polymer being **characterized by** an isotacticity, expressed in terms isotactic pentads, from 60 to 95% molar and by an intrinsic viscosity, measured in tetraline at 135°C, of at least 1.0 dL/g.

2. The pre-polymerized catalyst component according to claim 1 in which isotacticity ranges from 65 to 90%.

3. The pre-polymerized catalyst component according to claim 1 in which the isotacticity ranges from 60 to 85%.

4. The pre-polymerized catalyst component according to claim 1 in which the intrinsic viscosity is equal to or higher than 1.3dL/g.

5. The pre-polymerized catalyst component according to claim 4 in which the intrinsic viscosity is equal to or higher than 1.5dL/g.

6. The pre-polymerized catalyst component according to claim 5 in which the intrinsic viscosity ranges from 1.5 to 2.5 dL/g.

7. The pre-polymerized catalyst component of claim 6 in which the isotacticity is higher than 70%.

8. The pre-polymerized catalyst component according to claim 1 in which the amount of alpha-olefin (co)polymer is less than 100g per g of solid catalyst component.

9. The pre-polymerized catalyst component according to claim 8 in which the amount of alpha-olefin (co)polymer is from 0.5 to 5 g per g of solid catalyst component.

10. The pre-polymerized catalyst component according to claim 1 in which the magnesium derives from magnesium dichloride and the titanium atoms derive from titanium compounds of formula Ti(OR)_{n-y}X_{y}, where R is a C1-C20 hydrocarbon group, X is halogen, n is the valence of titanium and y is a number between 1 and n.

11. The pre-polymerized catalyst component according to claim 9 in which the solid catalyst component further comprises an electron donor compound selected from esters of aliphatic or aromatic carboxylic acids, alkoxybenzenes, cyclic alkyl ethers, and electron donor compound of formula (I) below
RR₁C(OR₄)-CR₂R₃(OR₅) (I)
in which R, R₁, R₂ and R₃ are, independently, hydrogen or C₁-C₂₀ hydrocarbon groups which can also be condensed to form a cycle, R₄ and R₅ are C₁-C₂₀ alkyl groups, or R₆CO- groups where R₆ is a C₁-C₂₀ alkyl or aryl group, or they can be joined with R and R₃ respectively to form a cycle; said R to R₆ groups possibly containing heteroatoms selected from O, Si, halogens, S, N and P.

12. A catalyst system for the polymerization of olefins comprising the product obtained by contacting (A) a pre-polymerized catalyst component according to any of the preceding claims; and (B) an Al-alkyl compound.

13. A process for the (co)polymerization of ethylene **characterized in that** it is carried out in the presence of a catalyst comprising (A) a pre-polymerized catalyst component according to any of the preceding claims; and (B) an Al-alkyl compound.

14. A process for the preparation of a pre-polymerized catalyst component as defined in claim 1 comprising contacting the alpha-olefin CH₂=CHR¹ as defined in claim 1, a non-stereospecific solid catalyst component comprising Ti, Mg and a halogen, an aluminum alkyl (B) as cocatalyst and an external electron donor compound (C) in such an amount to have a molar ratio (B)/(C) lower than 100.

## Patentansprüche

1. Vorpolymerisierte Katalysatorkomponente zur Polymerisation von Olefinen, **dadurch gekennzeichnet, dass** sie eine nicht-stereospezifische feste Katalysatorkomponente, die Ti, Mg und ein Halogen umfasst, sowie eine Menge eines (Co)polymers eines alpha-Olefins CH₂=CHR¹, wobei R¹ eine C₁-C₁₂-Kohlenwasserstoffgruppe ist, im Bereich von 0,1 bis zu 500 g pro g der festen Katalysatorkomponente umfasst, wobei das (Co)polymer durch eine Isotaktizität, ausgedrückt in Form isotaktischer Pentaden, von 60 bis 95 % molar und durch eine in Tetralin bei 135 °C gemessene Grenzviskosität von mindestens 1,0 dL/g gekennzeichnet ist.

2. Vorpolymerisierte Katalysatorkomponente nach Anspruch 1, wobei die Isotaktizität im Bereich von 65 bis 90 % liegt.

3. Vorpolymerisierte Katalysatorkomponente nach Anspruch 1, wobei die Isotaktizität im Bereich von 60 bis 85 % liegt.

4. Vorpolymerisierte Katalysatorkomponente nach Anspruch 1, wobei die Grenzviskosität gleich oder höher als 1,3 dL/g ist.

5. Vorpolymerisierte Katalysatorkomponente nach Anspruch 4, wobei die Grenzviskosität gleich oder höher als 1,5 dL/g ist.

6. Vorpolymerisierte Katalysatorkomponente nach Anspruch 5, wobei die Grenzviskosität im Bereich von 1,5 bis 2,5 dL/g liegt.

7. Vorpolymerisierte Katalysatorkomponente nach Anspruch 6, wobei die Isotaktizität höher als 70 % liegt.

8. Vorpolymerisierte Katalysatorkomponente nach Anspruch 1, wobei die Menge an alpha-Olefin(co)polymer geringer als 100 g pro g fester Katalysatorkomponente ist.

9. Vorpolymerisierte Katalysatorkomponente nach Anspruch 8, wobei die Menge an alpha-Olefin(co)polymer 0,5 bis 5 g pro g fester Katalysatorkomponente ist.

10. Vorpolymerisierte Katalysatorkomponente nach Anspruch 1, wobei das Magnesium von Magnesiumdichlorid abgeleitet ist und die Titanatome von Titanverbindungen der Formel Ti(OR)_{n-y}X_{y} abgeleitet sind, wobei R eine C₁-C₂₀-Kohlenwasserstoffgruppe ist, X Halogen ist, n die Wertigkeit von Titan ist und y eine Zahl zwischen 1 und n ist.

11. Vorpolymerisierte Katalysatorkomponente nach Anspruch 9, wobei die feste Katalysatorkomponente ferner eine Elektronendonorverbindung ausgewählt aus Estern von aliphatischen oder aromatischen Carbonsäuren, Alkoxybenzolen, cyclischen Alkylethern und Elektronendonorverbindung mit der folgenden Formel (I) umfasst:
RR₁C(OR₄)-CR₂R₃(OR₅) (I)
worin R, R₁, R₂ und R₃ unabhängig Wasserstoff oder C₁-C₂₀-Kohlenwasserstoffgruppen sind, die auch unter Bildung eines Cyclus kondensiert sein können, R₄ und R₅ C₁-C₂₀-Al-kylgruppen oder oder R₆CO- Gruppen sind, wobei R₆ eine C₁-C₂₀-Alkyl- oder Arylgruppe ist, oder sie mit R beziehungsweise R₃ verbunden sein können, um einen Cyclus zu bilden, wobei die Gruppen R bis R₆ möglicherweise Heteroatome ausgewählt aus O, Si, Halogenen, S, N und P enthalten.

12. Katalysatorsystem zur Polymerisation von Olefinen, umfassend das Produkt, welches durch Kontaktieren von (A) einer vorpolymerisierten Katalysatorkomponente nach einem der vorhergehenden Ansprüche und (B) einer Al-Alkylverbindung erhalten wird.

13. Verfahren zur (Co)polymerisation von Ethylen, **dadurch gekennzeichnet, dass** es in Gegenwart eines Katalysators durchgeführt wird, der (A) eine vorpolymerisierte Katalysatorkomponente gemäß einem der vorhergehenden Ansprüche und (B) eine Al-Alkylverbindung umfasst.

14. Verfahren zur Herstellung der vorpolymerisierten Katalysatorkomponente wie in Anspruch 1 definiert, umfassend Kontaktieren des alpha-Olefins CH₂=CHR¹ wie in Anspruch 1 definiert, einer nicht-stereospezifischen festen Katalysatorkomponente, die Ti, Mg und ein Halogen umfasst, eines Aluminiumalkyls (B) als Cokatalysator und einer externen Elektronendonorverbindung (C) in einer solchen Menge, dass ein Molverhältnis (B)/(C) kleiner als 100 vorliegt.

## Revendications

1. Constituant catalytique prépolymérisé pour la polymérisation d'oléfines, **caractérisé en ce qu'**il comprend un constituant catalytique solide non stéréospécifique, comprenant Ti, Mg et un halogène, et une quantité d'un (co)polymère d'une alpha-oléfine CH₂=CHR¹, R¹ représentant un groupe hydrocarboné en C₁-C₁₂, de 0,1 jusqu'à 500 g par g dudit constituant catalytique solide, ledit (co)polymère étant **caractérisé par** une isotacticité, exprimée en termes de pentades isotactiques, de 60 à 95% en mole et par une viscosité intrinsèque, mesurée dans la tétraline à 135°C, d'au moins 1,0 dl/g.

2. Constituant catalytique prépolymérisé selon la revendication 1, dans lequel l'isotacticité se situe dans la plage de 65 à 90% en poids.

3. Constituant catalytique prépolymérisé selon la revendication 1, dans lequel l'isotacticité se situe dans la plage de 60 à 85% en poids.

4. Constituant catalytique prépolymérisé selon la revendication 1, dans lequel la viscosité intrinsèque est égale ou supérieure à 1,3 dl/g.

5. Constituant catalytique prépolymérisé selon la revendication 4, dans lequel la viscosité intrinsèque est égale ou supérieure à 1,5 dl/g.

6. Constituant catalytique prépolymérisé selon la revendication 5, dans lequel la viscosité intrinsèque se situe dans la plage de 1,5 à 2,5 dl/g.

7. Constituant catalytique prépolymérisé selon la revendication 6, dans lequel l'isotacticité est supérieure à 70%.

8. Constituant catalytique prépolymérisé selon la revendication 1, dans lequel la quantité de (co)polymère d'alpha-oléfine est inférieure à 100 g par g de constituant catalytique solide.

9. Constituant catalytique prépolymérisé selon la revendication 8, dans lequel la quantité de (co)polymère d'alpha-oléfine est de 0,5 à 5 g par g de constituant catalytique solide.

10. Constituant catalytique prépolymérisé selon la revendication 1, dans lequel le magnésium provient de dichlorure de magnésium et les atomes de titane proviennent de composés de formule Ti(OR)_{n-y}X_{y}, où R représente un groupe hydrocarboné en C₁-C₂₀, X représente halogène, n représente la valence du titane et y représente un nombre entre 1 et n.

11. Constituant catalytique prépolymérisé selon la revendication 9, dans lequel le constituant catalytique solide comprend en outre un composé donneur d'électrons choisi parmi les esters d'acides carboxyliques aliphatiques ou aromatiques, les alcoxybenzènes, les alkyléthers cycliques et un composé donneur d'électrons de formule (I) ci-dessous
RR₁C(OR₄)-CR₂R₃(OR₅) (I)
dans laquelle R, R₁, R₂ et R₃ représentent, indépendamment, hydrogène ou des groupes hydrocarbonés en C₁-C₂₀ qui peuvent également être condensés pour former un cycle, R₄ et R₅ représentent des groupes C₁-C₂₀-alkyle ou des groupes R₆CO-, où R₆ représente un groupe C₁-C₂₀-alkyle ou aryle, ou ils peuvent être liés respectivement à R et à R₃ pour former un cycle ; lesdits groupes R à R₆ contenant éventuellement des hétéroatomes choisis parmi O, Si, halogènes, S, N et P.

12. Système catalytique pour la polymérisation d'oléfines, comprenant le produit obtenu par la mise en contact de (A) un constituant catalytique prépolymérisé selon l'une quelconque des revendications précédentes et (B) un composé d'Al-alkyle.

13. Procédé de (co)polymérisation d'éthylène **caractérisé en ce qu'**il est effectué en présence d'un catalyseur comprenant (A) un composé catalyseur prépolymérisé selon l'une quelconque des revendications précédentes ; et (B) un composé de type Al-alkyle.

14. Procédé pour la préparation d'un constituant catalytique prépolymérisé tel que défini dans la revendication 1, comprenant la mise en contact de l'alpha-oléfine CH₂=CHR¹ telle que définie dans la revendication 1, d'un constituant catalytique solide non stéréospécifique, comprenant Ti, Mg et un halogène, d'un alkyl-aluminium (B) en tant que cocatalyseur et d'un composé (C) donneur d'électrons externe en une quantité telle que le rapport molaire (B)/(C) est inférieur à 100.
